# EUROPÄISCHE PATENTSCHRIFT

(11) **EP 2 140 654 B1**
(45) Veröffentlichungstag und Bekanntmachung des Hinweises auf die Patenterteilung: **18.03.2020**
(21) Anmeldenummer: 08734866.0
(22) Anmeldetag: 28.03.2008
(51) Int. Cl.: H04W 12/00, H04L 29/06, G06F 21/00, H04L 12/22

(54) **MULTIMEDIA-EINRICHTUNG UND VERFAHREN ZUR DATENÜBERTRAGUNG BEI EINER MULTIMEDIA-EINRICHTUNG**
MULTIMEDIA DEVICE AND METHOD FOR DATA TRANSMISSION IN A MULTIMEDIA DEVICE
DISPOSITIF MULTIMÉDIA ET PROCÉDÉ DE TRANSMISSION DE DONNÉES PAR UN DISPOSITIF MULTIMÉDIA

(30) Priorität: 30.03.2007 DE 102007015788
(43) Veröffentlichungstag der Anmeldung: 06.01.2010
(73) Patentinhaber: fm marketing gmbh, 5162 Obertrum am See (AT)
(72) Erfinder: MAIER, Ferdinand, A-5162 Obertrum (AT)
(74) Vertreter: Tamada, Sascha
(86) Internationale Anmeldenummer: PCT/EP2008/002494
(87) Internationale Veröffentlichungsnummer: WO 2008/119515

(56) Entgegenhaltungen:
- EP-A- 1 602 999
- WO-A-2007/022481

## Beschreibung

Die Erfindung bezieht sich auf eine Multimedia-Einrichtung gemäß dem Oberbegriff des Patentanspruches 1 sowie auf ein Verfahren zur Datenübertragung bei einer Multimedia-Einrichtung gemäß dem Oberbegriff des Patentanspruches 2.

Einrichtung und Verfahren dieser Art sind aus der WO 2007/022481 A bekannt.

Dort ist eine Fernsteuerung für Multimedia-Vorrichtungen mit einer Einrichtung zur Erfassung eines Fingerabdrucks zur Authentifikation eines Nutzers beschrieben. Nach der Authentifikation werden die Multimedia-Vorrichtungen personalisiert, das heißt, es werden bestimmte Funktionen abhängig von der Identitität des Nutzers freigeschaltet oder nicht.

Eine ähnliche Vorrichtung ist auch aus der DE 198 58 310B4 bekannt.

Die EP-A-1 602 999 beschreibt ein Verfahren zur Datenreproduktion mit einem Nutzergerät, das einen biometrischen Sensor, wie z.B. einen Fingerabdruckleser und eine SIM-Karte enthält, auf der Nutzerdaten gespeichert sind. Ist der Benutzer des Gerätes ordnungsgemäß identifiziert, so wird eine Verbindung zu einem weiteren Gerät oder einem Netzwerk freigeschaltet. Die Übertragung der Freischaltdaten erfolgt in verschlüsselter Form. Die gesamte Identifizierung des Benutzers erfolgt in dem Gerät, das daher einen aufwendigen Prozessor und damit hohen Hardwareaufwand benötigt.

Die heutigen Geräte der Unterhaltungselektronik, wie z.B. Fernsehgeräte, Audiogeräte, DVD-Geräte, Satellitenempfänger, Videorecorder, Set-Top-Boxen etc., werden üblicherweise durch eine Fernsteuerung bedient, die meist drahtlos über eine Infrarot- oder Funkverbindung mit den entsprechenden Geräten kommuniziert. All diese Multimedia-Geräte, zu denen heute auch Computer zu zählen sind, werden nachfolgend als "Gerät" bezeichnet. All diese Geräte sowie im zunehmenden Maße auch weitere in Haushalten befindliche Einrichtungen, wie z.B. Garagentor-Steuerungen, Alarmanlagen, Heizungssteuerungen, Haushalts- und Küchengeräte sowie auch Telekommunikationseinrichtungen wie Telefon, Fax, Internetzugang, werden heute in zunehmendem Maße vernetzt und möglichst von nur einer einzigen Fernsteuerung gesteuert. Viele der genannten Geräte lassen sich für verschiedene Benutzer individuell konfigurieren und an Vorlieben des jeweiligen Benutzers anpassen. Am Beispiel eines Fernsehempfängers seien einige wenig bekannte Anpassungen erläutert:
- es kann eine "Kindersicherung" vorgesehen sein, die nur ausgewählte Fernsehkanäle freigibt und/oder nur zu vordefinierten Zeiten überhaupt einen Fernsehempfang zuläßt;
- Fernsehgewohnheiten können vorprogrammiert werden, beispielsweise daß ein bestimmter Benutzer an bestimmten Wochentagen zu bestimmten Zeiten bestimmte Sendungen auf bestimmten Kanälen sieht;
- für jeden Benutzer kann eine Liste bevorzugter Fernsehkanäle erstellt werden, die als "Favoriten" in einem Auswahlmenü bevorzugt angezeigt werden;
- je nach Benutzer und Gerät kann die Tastenbelegung der Tasten der Fernsteuerung verändert werden;
- bei interaktiven Systemen, wie interaktivem Fernsehen, Homeshopping, Homebanking, Video on demand oder ähnlichem können Sicherungen vorgesehen sein, beispielsweise Begrenzungen für Bestellungen von Waren oder Filmen, Arten von Filmen (z.B. jugendfrei) usw.

Aus obigen Gründen ist es erforderlich, die Fernsteuerung automatisch an den jeweiligen Benutzer anzupassen und eine individuelle Zugangsberechtigung zu konfigurieren und freizuschalten.

Zu diesem Zwecke wurde bereits mehrfach vorgeschlagen, die Fernsteuerung mit einer Identifikationseinrichtung auszustatten, die möglichst automatisch eine zugangsberechtigte Person erkennt. So schlägt die DE 198 58 310 B4 einen Fingerabdruckleser in der Fernsteuerung vor, der biometrische Daten des Benutzers mittels Sensoren feststellt und bei erkannter zugangsberechtigter Person ein individuelles Bedienungsprofil aktiviert.

Auch sonstige Erfassungsgeräte für biometrische Daten, wie ein Stimmerkennungsschaltkreis, eine Irisabtasteinrichtung und eine Gesichtserkennungseinrichtung wurden bereits vorgeschlagen (vgl. WO 02/17627 A2).

Besonders häufig wird der Fingerabdruck einer Person zur Identifizierung verwendet, wie z.B. in der US 2001/007592 A1, US 2005/0149870 A1, US 5,758,257, US 5,771,307, US 5,920,642, US 6,020,882, US 6,130,726, US 6,137,539, US 6,914,517 B2, US 6,968,565 B1 oder WO 01/56213 A1 beschrieben.

Bei all diesen Fernsteuerungen mit Personenerkennung stellen sich folgende Probleme:
- Es soll ein hohes Maß an Sicherheit gewährleistet sein, was beinhaltet, daß ein Gerät nicht durch eine fremde Fernsteuerung betrieben werden kann und daß nicht "unbefugt" ein neuer Benutzer angelegt werden kann;
- der Hardware-Aufwand der Fernsteuerung soll möglichst gering sein;
- der Stromverbrauch der Fernsteuerung soll möglichst gering sein;
- die Kommunikation zwischen Fernsteuerung und Gerät soll möglichst "abhörsicher" sein, was insbesondere deswegen von erhöhter Bedeutung ist, weil es eine Vielzahl von programmierbaren Fernsteuerungen auf dem Markt gibt, die von einer Original-Fernsteuerung ausgesandte Signale aufzeichnen, speichern und wiedergeben können.

Zur Erhöhung der Sicherheit gibt es verschiedene Vorschläge. So schlägt die US 2001/0007592 A1 vor, eine Folge von mehreren Fingerabdrücken verschiedener Finger abzufragen.

Die EP 1 286 518 A2 schlägt vor, mindestens eine Taste der Fernbedienung mit einem Fingerabdruckleser auszustatten, so daß jedesmal beim Aufrufen bestimmter Funktionen, wie z.B. Kanalwechsel, Bestätigungstaste oder ähnlichem, eine Überprüfung des autorisierten Benutzers vorgenommen wird.

Zur Erhöhung der Zugangssicherheit ist in der älteren, nicht vorveröffentlichten deutschen Patentanmeldung 10 2006 042 014 der Anmelderin vorgeschlagen, zusätzlich zu einer Leseinrichtung für biometrische Daten, insbesondere einem Fingerabdruckleser, noch eine weitere HardwareEinrichtung vorzusehen, die die Fernsteuerung als solche identifiziert, was beim konkreten Ausführungsbeispiel durch eine sogenannte SIM-Karte realisiert ist. Damit ist zumindest die Neuanlage eines Benutzerprofiles oder die Änderung eines vorhandenen Benutzerprofiles nur möglich, wenn die SIM-Karte in die Fernsteuerung eingesetzt ist.

Aufgabe der Erfindung ist es, die eingangs genannte Multimedia-Einrichtung sowie das Verfahren zur Datenübertragung bei einer Multimedia-Einrichtung der eingangs genannten Art dahingehend zu verbessern, daß bei geringem Hardware-Aufwand der Fernsteuerung eine hohe Übertragungssicherheit der Daten von der Fernsteuerung zu dem Gerät gewährleistet ist.

Diese Aufgabe wird für die Multimedia-Einrichtung durch die im Patentanspruch 1 und für das Verfahren durch die im Patentanspruch 2 angegebenen Merkmale gelöst.

Vorteilhafte Ausgestaltungen und Weiterbildungen der Erfindung sind den Unteransprüchen zu entnehmen.

Kurz zusammengefaßt wird die Teilaufgabe des verringerten Hardware-Aufwandes dadurch gelöst, daß die biometrischen Daten, die von der Fernsteuerung erfaßt werden, an das Gerät übertragen und erst dort ausgewertet werden. Die Auswertung der biometrischen Daten erfordert relativ hohe Prozessorleistung, die in dem Gerät ohnehin vorhanden ist, während das Erfassen der biometrischen Daten, beispielsweise mit einem Fingerabdruckleser nur vergleichsweise geringere Rechenleistung erfordert, so daß in der Fernsteuerung ein einfacherer und damit weniger aufwendiger Prozessor eingesetzt werden kann, der dann auch einen geringeren Strombedarf hat. Die erhöhte Sicherheit der Datenübertragung wird durch eine spezielle Verschlüsselung der von der Fernsteuerung zum Gerät übertragenen Daten gewährleistet unter Einbeziehung von auf der SIM-Karte gespeicherten Daten.

Im folgenden wird die Erfindung anhand eines Ausführungsbeispieles im Zusammenhang ausführlicher erläutert.

Es zeigt:
- Fig. 1: ein Blockschaltbild einer Multimedia-Einrichtung mit Fernsteuerung und Multimedia-Gerät;
- Fig. 2: ein Flußdiagram der Arbeitsschritte des Verfahrens bei der Initialisierung einer Verbindung zwischen Fernsteuerung und Gerät;
- Fig. 3: ein Flußdiagram der Arbeitsschritte des Verfahrens bei einem Identifikationsprozeß.

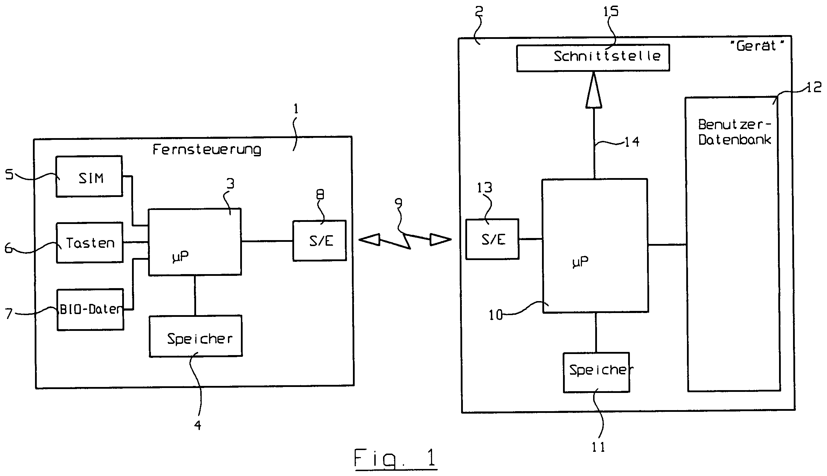

Fig. 1 zeigt eine Fernsteuerung 1, die ein Gerät 2 steuert, wobei das Gerät 2 seinerseits eine Vielzahl von weiteren Geräten steuern kann, wie oben angegeben. In Fig. 1 sind nur die für die Steuerung maßgeblichen Baugruppen dargestellt.

Die Fernsteuerung 1 enthält einen Mikroprozessor 3, einen Speicher 4, einen SIM-Kartenleser 5, eine Tastatur 6 und eine Einrichtung 7 zum Erfassen biometrischer Daten, insbesondere eine Einrichtung zum Erfassen eines Fingeradruckes. Weiter enthält die Fernsteuerung eine Sende-/Empfangseinrichtung 8, vorzugsweise zum Aussenden und Empfangen von Infrarotsignalen. Die genannten Baugruppen 4-8 sind an den Mikroprozessor 3 angeschlossen.

Der Speicher 4 kann in mehrere Untergruppen aufgeteilt sein und beispielweise einen Nur-Lese-Speicher für Programme und einen Arbeitsspeicher aufweisen. Eine in den SIM-Kartenleser 5 einzusetzende SIM-Karte enthält in an sich bekannter Weise ebenfalls einen oder mehrere Speicher. Die Sende-/Empfangseinheit 8 steht über eine bidirektionale drahtlose Funkverbindung 9 mit dem Gerät 2 in Verbindung. Das Gerät 2 enthält ebenfalls einen Mikroprozessor 10, einen Speicher 11, der ebenfalls einen Programmspeicher und einen Arbeitsspeicher enthält sowie einen weiteren Speicher, der hier als Benutzerdatenbank 12 bezeichnet ist und schließlich eine Sende-/Empfangseinheit 13, die mit der Sende-/Empfangseinheit 8 der Fernsteuerung in drahtloser Verbindung 9 steht.

Der Mikroprozessor 10 hat einen Ausgang 14, der über eine Schnittstelle 15 mit einem oder mehreren zu steuernden Geräten in Verbindung steht.

An die Schnittstelle 15 können mit bekannten Verbindungen, z.B. "SCART"-Kabel, "USB"-Anschluß oder ähnlichem, eine beliebige Anzahl verschiedener zu steuernder Geräte angeschlossen werden.

Hervorzuheben ist, daß der Mikroprozessor 3 der Fernsteuerung 1 eine geringere Rechenleistung hat als der Mikroprozessor 10 des Gerätes. Er hat damit auch einen geringeren Stromverbrauch und ist kostengünstiger.

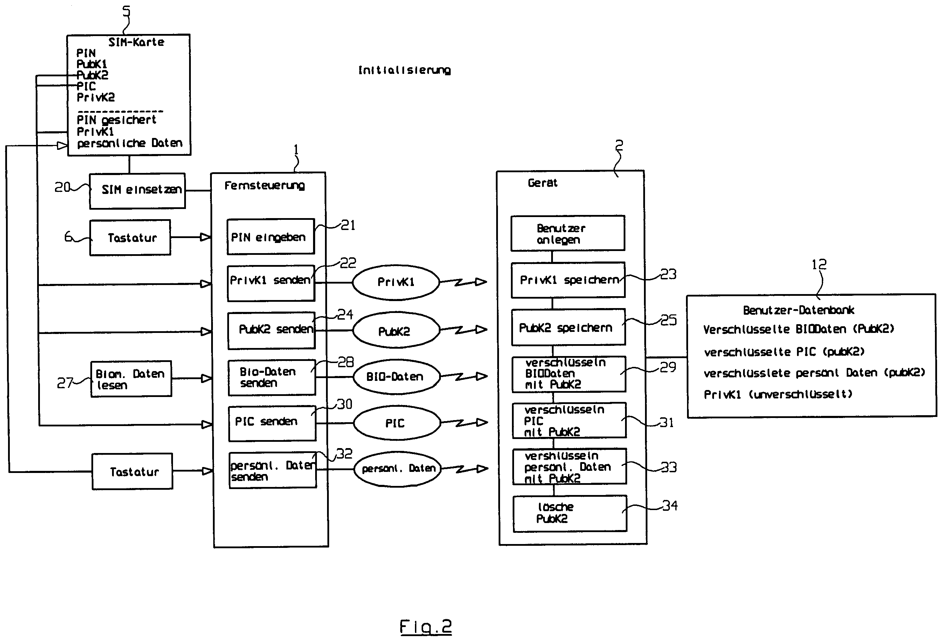

Unter Bezugnahme auf Fig. 2 wird jetzt die Initialisierungsphase beschrieben. Zunächst muß in einem Schritt 20 die SIM-Karte in den SIM-Kartenleser 5 der Fig. 1 eingesetzt werden. Die SIM-Karte enthält folgende gespeicherte Daten:
1. Eine persönliche Identifikationsnummer (sog. PIN),
2. persönliche Daten eines Benutzer, wie z.B. Name, Geburtsdatum, Geschlecht, Kreditkartennummer etc.,
3. einen ersten privaten Schlüssel (PrivK 1),
   wobei die unter 2. und 3. genannten Daten nur nach Eingabe der unter 1. genannten PIN zugänglich sind.

Weiter enthält die SIM-Karte folgende frei zugängliche Daten:
4. einen zweiten privaten Schlüssel (PrivK 2),
5. einen persönlichen Identifikationscode (PIC),
6. einen ersten öffentlichen Schlüssel (PubK 1) und
7. einen zweiten öffentlichen Schlüssel (PubK 2).

Wie weiter unten noch ausführlicher erläutert wird, bilden die Schlüssel PubK 1 und PrivK 1 ein erstes und die Schlüssel PubK 2 und PrivK 2 ein zweites Paar von Schlüsseln, die zur Verschlüsselung und Entschlüsselung verwendet werden. Dabei wird eine sog. asymmetrische Kryptographie angewandt, bei der zum Verschlüsseln von Daten ein Schlüssel eines der genannten Paare, meist der sog. öffentliche Schlüssel, verwendet wird und zum Entschlüsseln der andere Schlüssel des Paares, meist der sog. private Schlüssel. Zum Verschlüsseln und zum Entschlüsseln werden somit unterschiedliche Schlüssel verwendet. Eine Entschlüsselung von Daten mit dem Schlüssel, der zur Verschlüsselung verwendet wurde, ist nicht möglich. Die Algorithmen zur Verschlüsselung und Entschlüsselung sind im Prinzip bekannt. Es sei beispielsweise auf die asymmetrischen Verschlüsselungsalgorithmen RSA, das Rabin-Kryptosystem oder das Elgamal-Kryptosystem verwiesen. Nach dem Einsetzen der SIM-Karte wird zunächst die PIN abgefragt (Schritt 21), die über die Tastatur 6 (Fig. 1) eingegeben wird und üblicherweise eine vierstellige Zahl ist. Damit ist die SIM-Karte freigeschaltet und die über die PIN gesperrten, oben genannten persönlichen Daten und der private erste Schlüssel PrivK 1 sind zugänglich.

Die Fernsteuerung sendet dann über die Sende-/Empfangseinrichtung 8 den ersten privaten Schlüssel PrivK 1 (Schritt 22) und den zweiten öffentlichen Schlüssel PubK 2 (Schritt 24) an das Gerät 2, wo sie von der Sende-/Empfangseinheit 13 empfangen und über den Mikroprozessor 10 im Speicher 11 abgespeichert werden (Schritte 22-25). Sodann werden die biometrischen Daten des Benutzers über die Fingerabdruckleseeinrichtung 7 eingelesen (Schritt 27) und an das Gerät 2 übertragen (Schritt 28), wo sie mit dem zuvor empfangenen und gespeicherten öffentlichen Schlüssel PubK 2 verschlüsselt werden (Schritt 29). In ähnlicher Weise wird der persönliche Identifikationscode PIC von der SIM-Karte abgefragt und zum Gerät 2 übertragen (Schritt 30), wo er ebenfalls mit dem öffentlichen Schlüssel PubK 2 verschlüsselt wird (Schritt 31). Darauf werden die persönlichen Daten des Benutzers entweder von der SIM-Karte abgefragt oder über die Tastatur eingegeben und an das Gerät 2 übertragen (Schritt 32), wo sie ebenfalls mit dem zweiten öffentlichen Schlüssel PubK 2 im Schritt 33 verschlüsselt werden.

Der zweite öffentliche Schlüssel PubK 2, der im Schritt 25 im Gerät 2 gespeichert wurde, wird nach diesen Vorgängen im Schritt 34 gelöscht. Aus den gespeicherten und teilweise verschlüsselten Daten wird dann in der Benutzerdatenbank 12 ein Benutzerprofil angelegt und gespeichert, das zunächst folgende Daten enthält:
- den unverschlüsselten ersten privaten Schlüssel PrivK 1,
- die mit dem Schlüssel PubK 2 verschlüsselten biometrischen Daten des Benutzers,
- den verschlüsselten persönlichen Identifikationscode (PIC) und die verschlüsselten persönlichen Daten, jeweils mit PubK 2 verschlüsselt.

Zusätzlich kann der Benutzer zu den persönlichen Daten noch weitere Daten hinzufügen, wie z.B. Kanalliste bevorzugter Fernsehkanäle, Tastenbelegungen der Tasten der Fernsteuerung, gesperrte Fernsehkanäle, Fernsehzeiten, usw.

Der beschriebene Initialisierungsvorgang ist insoweit als kritisch einzustufen, als der erste private Schlüssel PrivK 1 drahtlos übertragen wird und damit "abgehört" werden kann, wenn ein geeignetes Empfangsgerät in Rechweite ist. Bei einer Infrarot-Übertragung ist die Gefahr, daß ein geeignetes Empfangsgerät in Rechweite ist, allerdings sehr gering, da die Reichweite stark begrenzt ist und eine ungestörte Sichtverbindung erforderlich ist.

Anschließend ist jedoch hohe Sicherheit gegeben, da die übrigen Daten mit dem öffentlichen Schlüssel PubK 2 verschlüsselt sind, der nach der Initialisierung im Gerät 2 gelöscht wird und diese Daten nicht mit dem privaten ersten Schlüssel PrivK 1 entschlüsselt werden können.

Zur weiteren Erhöhung der Sicherheit kann auch der Schlüssel PrivK 1 auf der SIM-Karte gelöscht werden, so daß er als "privater" Schlüssel bezeichnet werden kann, der nur noch dem Gerät zur Verfügung steht.

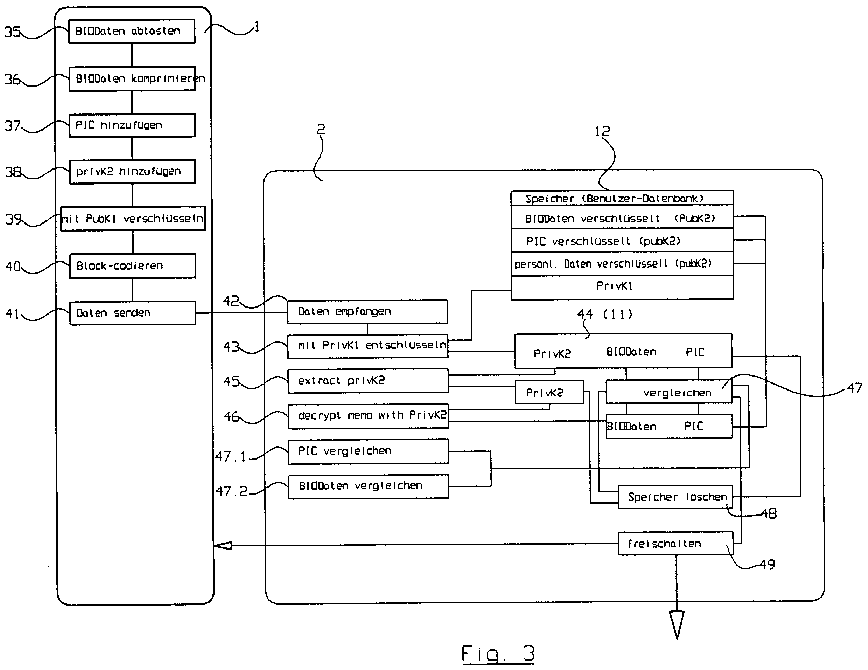

Im Zusammenhang mit Fig. 3 wird jetzt der normale Identifikationsprozeß beschrieben, mit welchem eine Verbindung zwischen der Fernsteuerung 1 und dem initialisierten Gerät 2 aufgebaut wird. Es wird davon ausgegangen, daß die Fernsteuerung 1 sendebereit und das Gerät 2 empfangsbereit sind.

In einem Schritt 35 werden die biometrischen Daten des Benutzers gelesen, beispielsweise indem der Benutzer einen Finger auf das Fingerabdrucklesegerät 7 legt, das entsprechende Bilddaten einliest. Diese Bilddaten können in einem Schritt 35 komprimiert werden, was nach bekannten Datenkompressionsverfahren, wie z.B. dem Huffman-Code, erfolgt.

Diesen komprimierten Bilddaten wird in einem Schritt 37 der persönliche Identifikationscode PIC hinzugefügt, der entweder von der SIM-Karte oder dem Speicher 4 (Fig. 1) ausgelesen wird. Weiter wird im Schritt 38 der zweite private Schlüssel PrivK 2 hinzugefügt, der ebenfalls von der SIM-Karte oder dem Speicher 4 ausgelesen wird. Dieses gesamte Datenpaket besteht aus den komprimierten biometrischen Daten, der PIC und dem Schlüssel PrivK 2. Dieses Datenpaket wird mit dem ersten öffentlichen Schlüssel PubK 1 in einem Schritt 39 verschlüsselt. Zusätzlich kann optional eine Blockcodierung und eine sog. Vorwärtsfehlerkorrektur (kurz FEC von Englisch "Forward error correction") vorgenommen werden (Schritt 40).

Sodann werden die so erzeugten Daten an das Gerät 2 über die Funkstrecke 9 übertragen (Schritt 41) und vom Gerät 2 empfangen (Schritt 42). Dort werden diese Daten zunächst mit dem in der Benutzerdatenbank gespeicherten privaten Schlüssel PrivK 1 entschlüsselt (Schritt 43), woraus man einen Datensatz mit PrivK 2, PIC und den biometrischen Daten erhält (Block 44), aus welchem in Schritt 45 der zweite private Schlüssel PrivK 2 extrahiert wird. Die biometrischen Daten und der PIC werden im Arbeitsspeicher 11 zwischengespeichert. Mit dem nunmehr entschlüsselten und extrahierten zweiten privaten Schlüssel PrivK 2 werden im Schritt 46 die in der Benutzerdatenbank 12 abgespeicherten und mit dem öffentlichen Schlüssel PubK 2 vor dem Abspeichern verschlüsselten Daten, nämlich der PIC, die biometrischen Daten und die persönlichen Daten entschlüsselt und im darauffolgenden Schritt 47 werden die nunmehr entschlüsselten Daten aus der Benutzerdatenbank und die empfangenen Daten miteinander verglichen. Zweckmäßigerweise wird zunächst der PIC verglichen. Sofern dieser nicht übereinstimmt, stammen die empfangenen Daten nicht von einer autorisierten Fernsteuerung, so daß weitere Arbeitsschritte abgebrochen werden können. Gegebenenfalls kann eine Aufforderung zum wiederholten Aussenden erzeugt werden, die beispielsweise auf einen Bildschirm des Fernsehgerätes angezeigt wird oder als Rücksignal über die Funkstrecke 9 an die Fernsteuerung 1 übermittelt und dort angezeigt wird.

Ergibt ein Vergleich des PIC eine autorisierte Fernsteuerung, so werden die biometrischen Daten verglichen (Schritt 47) und bei Übereinstimmung gibt der Mikroprozessor 10 ein Freigabesignal an seinem Ausgang 14 an die Schnittstelle 15 aus (Schritt 48). Es kann dann eine gesicherte, autorisierte Bedienung des Gerätes 2 und der daran angeschlossenen weiteren Geräte durch die Fernsteuerung 1 durchgeführt werden. Weiter kann auch über die Funkstrecke 9 die Tastenbelegung der Tasten 6 der Fernsteuerung 1 entsprechend dem identifizierten Benutzer festgelegt werden. Auch wird über die Funkstrecke 9 der Fernsteuerung ein Quittungssignal für eine erfolgreiche Anmeldung übermittelt, das in der Fernsteuerung sensible Daten im Speicher 4 löscht, insbesondere die erfaßten biometrischen Daten. In ähnlicher Weise werden auch im Speicher 11 des Gerätes die miteinander zu vergleichenden Daten gelöscht, so daß die Speicher 11 und 4 der Fernsteuerung 2 und des Gerätes 1 nach der erfolgreichen Anmeldung wieder in ihrem Ausgangszustand sind. Es kann dann der normale Betrieb zwischen Fernsteuerung 1 und Gerät 2 aufgenommen werden, der auch bidirektional sein kann.

Aus Sicherheitsgründen kann auch vorgesehen sein, daß die autorisierte Verbindung nach einer vorgegebenen Zeit unterbrochen wird und eine neue Anmeldung gemäß den in Zusammenhang mit Fig. 3 beschriebenen Schritten vorzunehmen ist. Auch kann vorgesehen sein, daß für bestimmte, sicherheitsrelevante Steuerungsvorgänge eine erneute Identifizierung vorzunehmen ist, beispielsweise bei Übermittlung von Name, Anschrift oder Kreditkartennummer über angeschlossene Kommunikationsgeräte.

Bei der Initialisierung gemäß den oben im Zusammenhang mit Fig. 2 beschriebenen Arbeitsschritten können bei den persönlichen Daten des jeweiligen Benutzers auch Nutzerrechte vergeben werden, beispielsweise bezüglich Anlegen oder Ändern von Benutzerprofilen, so daß beispielsweise nur bestimmte Personen, die über ihre biometrischen Daten identifiziert werden, berechtigt sind, neue Benutzer in der Benutzerdatenbank anzulegen oder bestimmten einzelnen Benutzern zugewiesene Rechte zu ändern. Andere Daten, die ebenfalls bei den persönlichen Daten abgespeichert sind, können dagegen so vereinbart werden, daß sie der einzelne Benutzer nach seiner Identifizierung frei ändern kann, wie z.B. Tastenbelegung der Fernsteuerung, Favoritenliste einzelner Fernsehsender, soweit diese freigegeben sind.

Zusammengefaßt wird mit der Erfindung ein sehr hohes Maß an Sicherheit erreicht. Selbst wenn das Gerät ohne SIM-Karte in Hände unautorisierter Personen gelangt, ist es nicht möglich, an die geschützten biometrischen Daten und die geschützten persönlichen Daten heranzukommen. Lediglich wenn eine unautorisierte Person das Gerät und die SIM-Karte zur Verfügung hat, so ist es theoretisch möglich, mit dem auf der SIM-Karte gespeicherten ersten Schlüssel PubK 1 die in der Benutzerdatenbank abgespeicherten geschützten Daten zu entschlüsseln. Hierzu muß der Benutzer dann aber unmittelbaren Zugang zur Benutzerdatenbank haben, was hohen technischen Aufwand erfordert. Hier kann herstellerseits vorgesehen sein, daß der entsprechende Speicher derart geschützt ist, daß entweder kein Zugang von außen möglich ist oder sein Inhalt automatisch gelöscht wird, wenn versucht wird, den Speicher auszubauen. Auf alle Fälle ist es empfehlenswert, den die Benutzerdatenbank enthaltenden Speicher zu löschen, bevor das Gerät Dritten übergeben wird.

## Patentansprüche

1. Multimediaeinrichtung mit einer Fernsteuerung (1), die
- einen ersten Mikroprozessor (3),
- eine erste Hardwareeinrichtung (5) zur Identifizierung der Fernsteuerung (1),
- eine zweite Hardwareeinrichtung (7) zur Erfassung biometrischer Daten einer Person und
- eine Sendeeinrichtung (8) zum Übertragen von Daten aufweist,
und mit einem Multimediagerät (2), das
- eine Empfangseinrichtung (13) zum Empfang der Daten,
einen Speicher (11, 12) und
einen zweiten Mikroprozessor (10) aufweist,
**dadurch gekennzeichnet,**
**dass** die erste Hardwareeinrichtung eine SIM-Karte (5) ist, auf der folgende Daten gespeichert sind:
- ein erstes Paar von digitalen Schlüsseln (PubK 1, PrivK 1),
- ein zweites Paar von digitalen Schlüsseln (PubK 2, PrivK 2),
- ein persönlicher Identifizierungscode (PIC), und
persönliche Daten mindestens eines Benutzers,
**dass** der Speicher (12) des Multimediagerätes (2) nach einer ersten Initialisierung folgende Daten gespeichert hält:
- nur einen Schlüssel (PrivK 1) des ersten Paares von digitalen Schlüsseln,
- nur einen Schlüssel (PubK 2) des zweiten Paares von digitalen Schlüsseln, die jeweils mit dem nur einen Schlüssel (PubK2) des zweiten Paares von digitalen Schlüsseln verschlüsselten biometrischen Daten, persönlichen Daten eines Benutzers und den ebenso verschlüsselten persönlichen Identifikationscode (PIC);
**dass** bei einem Verbindungsaufbau zwischen der Fernsteuerung (1) und dem Multimediagerät (2) die zweite Hardwareeinrichtung (7) biometrische Daten des Benutzers einliest,
diesen den persönlichen Identifikationscode (PIC) und den anderen Schlüssel (PrivK 2) des zweiten Paares von digitalen Schlüsseln hinzufügt,
ein so gebildetes Datenpaket mit dem anderen Schlüssel (PubK 1) des ersten Paares von digitalen Schlüsseln verschlüsselt und den so verschlüsselten Datensatz an das Multimediagerät (2) überträgt,
**dass** das Multimediagerät (2) den empfangenen, verschlüsselten Datensatz mit dem gespeicherten einen Schlüssel (PrivK 1) des ersten Paares von digitalen Schlüsseln entschlüsselt,
daraus den anderen Schlüssel (PrivK 2) des zweiten Paares von digitalen Schlüsseln, den persönlichen Identifikationscode (PIC) und die biometrischen Daten extrahiert,
aus dem Speicher (12) die verschlüsselten biometrischen Daten, die verschlüsselten persönlichen Daten und den verschlüsselten persönlichen Identifikationscode (PIC) ausliest und mit dem anderen Schlüssel (PrivK 2) des zweiten Paares von digitalen Schlüsseln entschlüsselt, den empfangenen entschlüsselten persönlichen Identifikationscode und den entschlüsselten gespeicherten persönlichen Identifikationscode miteinander vergleicht und bei Übereinstimmung die empfangenen entschlüsselten biometrischen Daten und die gespeicherten entschlüsselten biometrischen Daten miteinander vergleicht und nur bei Übereinstimmung das Multimediagerät (2) freischaltet.

2. Verfahren zur Datenübertragung bei einer Multimediaeinrichtung gemäß Anspruch 1 mit folgenden Arbeitsschritten:
Abspeichern eines ersten Schlüssels (PrivK 1) eines ersten Paares von digitalen Schlüsseln in einem Speicher eines Multimediagerätes,
Abspeichern von mit einem ersten Schlüssel (PubK 2) eines zweiten Paares von digitalen Schlüsseln verschlüsselten Benutzerdaten, die biometrische Daten, einen persönlichen Identifikationscode (PIC) und persönliche Daten enthalten,
Einlesen biometrischer Daten eines Benutzers in eine Fernsteuerung,
Hinzufügen eines persönlichen Identifikationscodes (PIC) aus einem Speicher sowie eines zweiten Schlüssels (PrivK 2) des zweiten Paares von digitalen Schlüsseln zur Bildung eines Datensatzes,
Verschlüsseln dieses Datensatzes mit dem zweiten Schlüssel des ersten Paares von digitalen Schlüsseln,
Übertragen des so verschlüsselten Datensatzes an ein Multimediagerät,
Entschlüsseln des empfangenen Datensatzes mit dem gespeicherten ersten Schlüssel (PrivK 1) des ersten Paares von digitalen Schlüsseln,
Extrahieren des zweiten Schlüssels (PrivK 2) des zweiten Paares von digitalen Schlüsseln, des persönlichen Identifikationscodes (PIC) und der biometrischen Daten aus dem entschlüsselten Datensatz,
Entschlüsseln der in dem Speicher des Multimediagerätes gespeicherten verschlüsselten Daten mit dem extrahierten entschlüsselten zweiten Schlüssel des zweiten Paares von digitalen Schlüsseln,
Vergleichen des entschlüsselten empfangenen Identifikationscodes mit dem entschlüsselten gespeicherten persönlichen Identifikationscode und bei Übereinstimmung Vergleichen der empfangenen entschlüsselten biometrischen Daten mit den gespeicherten entschlüsselten biometrischen Daten, und
Freischaltung des Multimediagerätes, wenn der Vergleich der biometrischen Daten eine Übereinstimmung ergibt.

3. Verfahren nach Anspruch 2, **dadurch gekennzeichnet, dass** die in die Fernsteuerung eingelesenen biometrischen Daten vor der Bildung des Datensatzes komprimiert werden.

4. Verfahren nach Anspruch 3, **dadurch gekennzeichnet, dass** das Komprimieren nach dem Huffman-Code erfolgt.

5. Verfahren nach einem der Ansprüche 2 bis 4, **dadurch gekennzeichnet, dass** der von der Fernsteuerung an das Multimediagerät zu übertragende Datensatz blockcodiert wird.

6. Verfahren nach einem oder mehreren der Ansprüche 2 bis 5, **dadurch gekennzeichnet, dass** der von der Fernsteuerung an das Multimediagerät zu übertragende Datensatz mit einer Vorwärtsfehlerkorrektur versehen wird.

## Claims

1. A multimedia device with a remote control (1), that comprises
- a first microprocessor (3),
- a first hardware device (5) for identifying the remote control (1),
- a second hardware device (7) for detecting biometric data of a person, and
- a transmitting device (8) for transmitting data,
and with a multimedia apparatus (2) that comprises
- a receiving device (13) for receiving the data,
a memory (11, 12) and
a second microprocessor (10),
**characterized in that**
the first hardware device is a SIM card (5) on which the following data is stored:
- a first pair of digital codes (PubK 1, PrivK 1),
- a second pair of digital codes (PubK 2, PrivK 2),
- a personal identification code (PIC), and
- personal data of at least one user,
that the memory (12) of the multimedia apparatus (2) holds the following data stored after a first initialization:
- only one code (PrivK 1) of the first pair of digital codes,
- only one code (PubK 2) of the second pair of digital codes,
- biometric data and personal data of a user, as well as the personal identification code (PIC) encoded with the only one code (PubK 2) of the second pair of digital codes,
that the second hardware device (7) reads in biometric data of the user upon an established connection between the remote control (1) and the multimedia apparatus (2),
adds to them the personal identification code (PIC) and the other code (PrivK 2) of the second pair of digital codes,
encodes a data packet formed in this manner with the other code (PubK 1) of the first pair of digital codes and transmits the data set encoded in this manner to the multimedia device (2),
that the multimedia device (2) decodes the received, encoded data set with the stored one code (PrivK 1) of the first pair of digital codes,
extracts from it the other code (PrivK 2) of the second pair of digital codes, the personal identification cod (PIC) and the biometric data,
extracts from the memory (12) the encoded biometric data, the encoded personal data and the encoded personal identification code (PIC) and decodes them with the other code (PrivK 2) of the second pair of digital codes, compares the received, decoded personal identification code and the decoded, stored personal identification code with one another and upon agreement compares the received, decoded biometric data and the stored, decoded biometric data with each other and only clears the multimedia apparatus (2) upon agreement.

2. A process for data transmission in a multimedia device in accordance with Claim 1 with the following process steps:
Storing of a first code (PrivK 1) of a first pair of digital codes in a memory of a multimedia device,
Storing of user data encoded with a first code (PubK 2) of a second pair of digital codes which data contains biometric data, a personal identification code (PIC) and personal data,
Reading in biometric data of a user into a remote control,
Adding a personal identification code (PIC) from a memory as well as adding a second code (PrivK 2) of the second pair of digital codes for forming a data set, encoding this data set with the second code of the first pair of digital codes,
Transmitting the data set encoded in this manner to a multimedia device,
Decoding the received data set with the stored first code (PrivK 1) of the first pair of digital codes,
Extracting components (PrivK 2, PIC, biometric data) from the decoded data set,
Decoding the encoded data stored in the memory of the multimedia device with the extracted, decoded second code of the second pair of digital codes,
Comparing the decoded, received identification code with the decoded, stored personal identification code and, upon agreement,
Comparing the received, decoded biometric data with the stored, decoded biometric data, and
Clearing the multimedia device if the comparison of the biometric data results in an agreement.

3. The process according to claim 2, **characterized in that** the biometric data read into the remote control is compressed before the forming of the data set.

4. The process according to Claim 3, **characterized in that** the compression takes place according to the Huffman code.

5. The process according to one of Claims 2 to 4, **characterized in that** the data set to be transmitted from the remote control to the multimedia device is block-coded.

6. The process according to one or more of Claims 2 to 5, **characterized in that** the data set to be transmitted from the remote control to the multimedia device is provided with a forward error correction.

## Revendications

1. Dispositif multimédia muni d'une télécommande (1) qui comporte
- un premier microprocesseur (3),
- un premier dispositif matériel (5) pour identifier la télécommande (1),
- un deuxième dispositif matériel (7) pour acquérir des données biométriques d'une personne et
- un dispositif d'émission (8) pour émettre des données,
et qui comprend un dispositif multimédia (2) qui comporte
- un dispositif de réception (13) pour recevoir les données,
une mémoire (11, 12) et
un deuxième microprocesseur (10),
**caractérisé**
**en ce que** le premier dispositif matériel est une carte SIM (5) sur laquelle sont mémorisées les données suivantes :
- une première paire de clés numériques (PubK 1, PrivK 1),
- une deuxième paire de clés numériques (PubK 2, PrivK 2),
- un code d'identification personnel (PIC) et
des données personnelles d'au moins un utilisateur,
**en ce que** la mémoire (12) de l'appareil multimédia (2), après une première initialisation, contient les données suivantes :
- une seule clé (PrivK 1) de la première paire de clés numériques,
- une seule clé (PubK 2) de la deuxième paire de clés numériques, des données biométriques, des données personnelles d'un utilisateur ainsi que le code d'identification personnel (PIC) cryptés respectivement avec ladite une seule clé (PubK 2) de la deuxième paire de clés numériques, et,
**en ce que** lorsqu'une connexion est établie entre la télécommande (1) et le dispositif multimédia (2), le deuxième dispositif matériel (7) lit les données biométriques de l'utilisateur, ajoute à ces dernières le code d'identification personnel (PIC) et l'autre clé (PrivK 2) de la deuxième paire de clés numériques, crypte un paquet de données ainsi formé avec l'autre clé (PubK 1) de la première paire de clés numériques et transmet le paquet de données ainsi crypté au dispositif multimédia (2),
**en ce que** le dispositif multimédia (2) décrypte le paquet de données crypté reçu avec ladite une clé stockée (PrivK 1) de la première paire de clés numériques,
extrait à partir de celui-ci l'autre clé (PrivK 2) de la deuxième paire de clés numériques, le code d'identification personnel (PIC) et les données biométriques,
extrait de la mémoire (12) les données biométriques cryptées, les données personnelles cryptées et le code d'identification personnel crypté (PIC) et les décrypte avec l'autre clé (PrivK 2) de la deuxième paire de clés numériques,
compare l'un à l'autre le code d'identification personnel décrypté reçu et le code d'identification personnel décrypté mémorisé et, en cas de concordance, compare les unes aux autres les données biométriques décryptées reçues et les données biométriques décryptées mémorisées et, uniquement en cas de concordance, active le dispositif multimédia (2).

2. Procédé de transmission de données dans un dispositif multimédia selon la revendication 1, comprenant les étapes de travail suivantes :
mémoriser une première clé (PrivK 1) d'une première paire de clés numériques dans une mémoire d'un appareil multimédia,
mémoriser des données numériques d'utilisateur cryptées avec une première clé (PubK 2) d'une deuxième paire de clés numériques, lesdites données comprenant des données biométriques, un code d'identification personnel (PIC) et des données personnelles,
lire des données biométriques d'un utilisateur dans une télécommande ,
ajouter un code d'identification personnel (PIC) provenant d'une mémoire ainsi qu'une deuxième clé (PrivK 2) de la deuxième paire de clés numériques pour former un ensemble de données,
crypter cet ensemble de données avec la deuxième clé de la première paire de clés numériques,
transmettre l'ensemble de données ainsi crypté à un dispositif multimédia,
décrypter l'ensemble de données reçu avec la première clé mémorisée (PrivK 1) de la première paire de clés numériques,
extraire de l'ensemble de données décrypté la deuxième clé (PrivK 2) de la deuxième paire de clés numériques, le code d'identification personnel (PIC) et les données biométriques,
décrypter les données cryptées mémorisées dans la mémoire du dispositif multimédia avec la deuxième clé extraite décryptée de la deuxième paire de clés numériques,
comparer le code d'identification décrypté reçu avec le code d'identification personnel décrypté et mémorisé et, en cas de concordance, comparer les données biométriques décryptées reçues avec les données biométriques décryptées mémorisées, et activer le dispositif multimédia si la comparaison des données biométriques montre une concordance.

3. Procédé selon la revendication 2, **caractérisé en ce que** les données biométriques lues dans la télécommande sont compressées avant que l'ensemble de données ne soit formé.

4. Procédé selon la revendication 3, **caractérisé en ce que** la compression est effectuée selon le code de Huffman.

5. Procédé selon l'une des revendications 2 à 4, **caractérisé en ce que** l'ensemble des données à transmettre de la télécommande à l'appareil multimédia est codé par blocs.

6. Procédé selon une ou plusieurs des revendications 2 à 5, **caractérisé en ce que** l'ensemble des données à transmettre de la télécommande à l'appareil multimédia est pourvu d'une correction d'erreur directe.
